# EUROPEAN PATENT SPECIFICATION

(11) **EP 2 160 889 B1**
(45) Date of publication and mention of the grant of the patent: **21.09.2011**
(21) Application number: 08762957.2
(22) Date of filing: 24.06.2008
(51) Int. Cl.: H04M 3/42, H04M 3/436

(54) **METHOD AND SYSTEM FOR CALLING PARTY CONTROL OF RINGBACK TONE CONTENT**
VERFAHREN UND SYSTEM ZUR ANRUFERSTEUERUNG VON RÜCKRUFTON-INHALT
PROCÉDÉ ET SYSTÈME DE CONTRÔLE DU CONTENU DE LA TONALITÉ DE RETOUR D'APPEL PAR L'APPELANT

(30) Priority: 26.06.2007 US 768501
(43) Date of publication of application: 10.03.2010
(73) Proprietor: Telefonaktiebolaget L M Ericsson (publ), 164 83 Stockholm (SE)
(72) Inventor: MANI, Babu, Murphy, TX 75098 (US); SIDDIQUI, Aqeel, Ahmed, Plano, TX 75074 (US)
(74) Representative: HOFFMANN EITLE
(86) International application number: PCT/IB2008/001648
(87) International publication number: WO 2009/001200

(56) References cited:
- WO-A-2007/063058
- WO-A-2007/127140
- US-A1- 2006 245 571

## Description

### TECHNICAL FIELD

The present invention relates to telecommunication systems. More particularly, and not by way of limitation, the present invention is directed to a system and method for calling party control of the ringback tone (RBT) content. As used herein, the following abbreviations shall have the following meanings:
CAMEL - Customized Applications for Mobile Network Enhanced Logic
CPC - Calling Party's Category
CRBT - Color Ringback Tone
GMSC - Gateway MSC
HLR - Home Location Register
HSS - Home Subscriber Server
ISUP - ISDN User Part
LIDB - Line Information Database
MSC - Mobile Switching Center
RBT - Ringback Tone
SCP - Service Control Point
SIP- Session Initiation Protocol

### BACKGROUND

In a call made over a telecommunications system using a wireless infrastructure, wireline infrastructure or both, a calling party uses telecommunication instrumentalities to signal a called party. The party that initiates the call is referred to as the caller, calling party, or originating party, and the party receiving the call is referred to as the called party, or terminating party. It is noted that a subscriber to a service may not be the actual calling party or called party. For example, a parent may be a subscriber to a wireless service, but the calling party or called party may be a child of the parent. As used herein, whether the subscriber and the calling/called party are the same or different persons depends on the context of the use of the term "subscriber". Further, RBT is a terminating service that is invoked during call set up, hence the RBT subscriber is always the called party.

Telecommunication service providers have developed RBT, which is a service provided to subscribers, in their role as a called party, that enables them to substitute the regular audible ringing provided to a calling party with a tone or audio clip selected by the called party during the process of connecting a call. It is also possible to substitute the tone or the audio clip with other media content. Thus the RBT content presented to callers can be video, text, graphics, photos, etc., only limited by the capabilities of the caller's handset and the transmission capabilities of the telecommunications network. This service is also known as Color Ringback Tones (CRBT). Currently, the calling party is subjected to the RBT content selected by the called party.

WO 2007/063058 A1 discloses a method for disabling the RBT content selected by the called party.

There are mandated or voluntary ratings assigned to television, radio, motion pictures, video games and other entertainment. RBT service providers also rate RBT content. Many RBT service providers have established policies that restrict subscribers, in their role as called party and who are categorized as "parental controlled", from purchasing inappropriate RBT content. The RBT content rating and the restrictions on the purchase or preview by parental controlled subscribers, such as minors, is in line with these ratings and control.

As noted above, the ability to restrict RBT content is made available to the called party, not the calling party. This is because RBT is a terminating subscriber service. In other words, a terminating user is the called party who subscribes to the RBT service and callers listen to RBT content as specified by the subscriber who is the called party. In this situation, the calling party is captive and has no way of opting out of or skipping the RBT. That is, the caller does not have control to override any preferences set by the called party.

It would be advantageous to have a system and method for allowing a subscriber, in their role as caller, to exercise control over the RBT content that is provided to the caller. Such control includes (a) provisioned or subscribed RBT control based on maturity level and (b) dynamic RBT control including ability to override subscribed/provisioned restriction level, block permanently content being played, and skipping content being played during current call set-up time. The present invention provides such a system and method.

### SUMMARY

The present invention is adapted to provide a subscriber, who is a caller, with the ability to activate, deactivate and/or otherwise control RBT content as heard on a caller's mobile handset, personal digital assistant, smart-phone, station, terminal, telephone or user equipment (sometimes referred to collectively herein as equipment or telephone). Caller control of RBT includes, but is not limited to the ability to override a called party's RBT selections, based on predefined Caller's maturity level, and/or Caller's instructions during call setup. More specifically, an embodiment of the present invention comprises a method and system for allowing a subscriber of equipment used by a calling party, or the calling party, to control, (i) prior to the process of connecting a call, the content of a Ring Back Tone (RBT) played to the calling party based on a maturity level or restriction rating, or (ii) dynamically, during the process of connecting a call. This service could be offered by telecommunication operators to their customers as either a paid, or courtesy feature.

According to a first aspect of the invention there is provided a method as set out in Claim 1.

According to a second aspect of the invention there is provided a system as set out in Claim 4.

According to a third aspect of the invention there is provided a platform as set out in Claim 8.

In an embodiment of the present invention, the Caller's maturity level profile is defined in a database. Such profile can include Boolean information such as whether parental control is implemented or non-Boolean information such as maturity levels or restriction ratings that are correlated to the caller equipment. This information could be kept in a database associated with the originating exchange, such as the Line Information Database (LIDB), or a separate database server such as Home Location Register (HLR) or Home Subscriber Server (HSS). When a call is made by a caller to a called party, the call is routed to a network node, typically a switch or a GMSC of the caller, e.g., the Home GMSC. The Home GMSC queries the HLR of the subscriber that is correlated to the called party equipment to obtain information from a profile of said subscriber. An SCP typically handles the RBT service by invoking the RBT service from, e.g., an Intelligent Peripheral (IP) Player that is adapted to play RBT content to the caller. The mechanism for sending the appropriate RBT content based on caller control to the terminating side can be accomplished using either a push method or a pull method. In case of push method the Caller's maturity level is sent to the RBT service node (either the SCP or the IP Player). Just as there are different protocols that can be used to signal the called party's equipment, there are several methods and systems that can be used to implement the present invention. For example, using a push method, the signaling from the caller may use ISUP to the GMSC and CAMEL from the GMSC to the SCP and CAMEL from the SCP to the IP Player. Alternatively, the signaling may use SIP between these network elements.

In a pull method, the SCP may query the originating exchange or a calling services database or may defer to the IP Player that can query the calling database. In response to information received about the caller, the IP Player may respond, or be directed to respond, with RBT content based on said information. For example, if the information indicates that a caller is under parental control or has a restriction based on a maturity level or restriction rating, RBT content selected by a called party that is not compatible with the restriction can be replaced with more suitable RBT content, and if no suitable content is available, then a default RBT content, such as ringing or equivalent content in other media, can be played to the caller. To implement the pull method, it is a pre-requisite that the RBT content be rated, for example, by a rating organization, and the service provider provides the ability to match the RBT content based on the calling party's maturity level with the content rating.

### BRIEF DESCRIPTION THE DRAWINGS

In the following section, the invention will be described with reference to exemplary embodiments illustrated in the figures, in which:
FIG. 1 is a signaling diagram illustrating the first embodiment of thepresent invention wherein maturity level or restriction rating information is pushed to an IP Player;
FIG. 2 is a signaling diagram illustrating the first embodiment of the present invention wherein maturity level or restriction rating information is pulled by an IP Player;
FIG. 3 is a flow chart of the steps of a first embodiment of the present invention;
FIG. 4 is a flow chart of the steps of a second embodiment of the present invention; and
FIG. 5 is a block diagram of a system which implements the present invention.

### DETAILED DESCRIPTION

The present invention is adapted to provide a caller with the ability to activate, deactivate and/or otherwise control RBT content as heard on the caller's mobile handset, personal digital assistant, smart-phone, station, terminal, telephone or user equipment (sometimes referred to collectively herein as equipment or telephone). Caller control of RBT includes, but is not limited to the ability to set and/or modify a caller's Boolean or non-Boolean parental control, maturity level or restriction rating setting prior to making a call so as to override a called party's RBT selections and the ability to replace or override a called party's RBT selections while a call is being made by the caller. Other embodiments allow the subscriber whose equipment is correlated to the caller to override or modify the restrictions on a call by call or session by session basis.

The subscriber can further control the call by call or session by session maturity level or restriction rating option according to a predetermined time limit. In other words, the maturity level or restriction rating can be valid until "turned off" by the subscriber, and the subscribed maturity level or restriction rating can remain valid until "turned on" by the subscriber. The mechanism is implemented by providing a feature code operable to flip the restriction level by the caller. In one aspect of the present invention, a restriction level is implemented in a non-Boolean manner, such as a progressive level of restriction, hence it is possible for subscriber to move up and down the restriction level. This can be done by making a service call--a call to flip restriction or change the subscription option, e.g., the restriction level. Alternatively, the restriction can be Boolean (either on or off), whereby the subscriber would only have the option to turn a restriction on or off.

In a first embodiment of the present invention, when a call is made by a caller to a called party, the call is routed from an End Office Switch or a Mobile Switching Center (MSC) of the calling party, to a network node, typically an End Office Switch or a Gateway Mobile Switching Center (GMSC) of the called party (the Home GMSC). The calling party's End Office Switch or MSC stores the calling subscriber's profile either permanently, or fetches dynamically from a database such as the home location register (HLR). Such profile can include Boolean information such as whether parental control is implemented or non-Boolean, such as information regarding a maturity level or restriction rating that is correlated to the caller equipment. This information could also be kept in a Home Subscriber Server (HSS). The Home GMSC queries the home location register (HLR) of the subscriber that is correlated to the called party equipment to obtain information from a profile of said subscriber. The mechanism for sending the appropriate RBT content based on caller control to the terminating side can be accomplished using either a push method or a pull method. A Service Control Point (SCP) typically handles the RBT service by invoking the RBT service from, e.g., an Intelligent Peripheral (IP) Player that is adapted to play RBT content back to the caller. Just as there are different protocols that can be used to signal the called party's equipment, there are several methods and systems that can be used to implement the present invention. For example, using the push method, the signaling from the caller may use ISDN User Part (ISUP) to the GMSC and Customized Applications for Mobile Network Enhanced Logic (CAMEL) from the GMSC to the SCP and CAMEL from the SCP to the IP Player. Alternatively, the signaling from the caller may use ISUP to the GMSC and ISUP, Session Initiation Protocol (SIP) or H.232 directly to the IP Player.

In a pull method, the SCP may query the GMSC or a calling services database (which may be the originating switch) or may defer to the IP Player that can query the calling database. In response to information received about the caller, the IP Player may respond, or be directed to respond, with RBT content based on said information. For example, if the information indicates that a caller is under parental control or has a restriction based on maturity level or restriction rating, a RBT content selected by a called party that is not compatible with the restriction can be replaced with more suitable RBT content, and if no suitable content is available, then a default RBT content, such as ringing or equivalent content in other media, can be played to the caller.

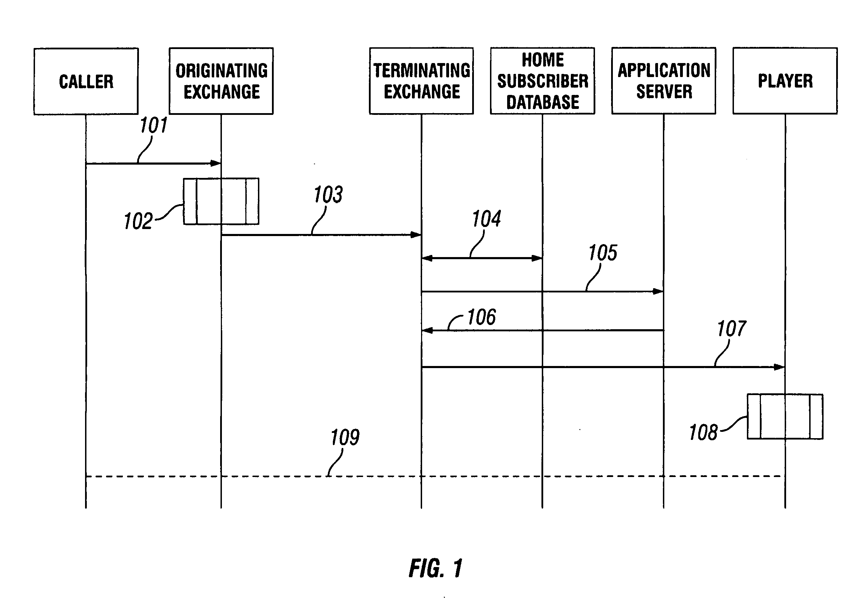

Referring now to Figure 1, a signaling diagram illustrating the first embodiment of the present invention wherein maturity level or restriction rating information is pushed to an IP Player is provided. As seen therein, in message 101, a caller initiates a call. In message 102, the originating exchange fetches the caller's maturity level or restriction rating from a local or remote database. In message 103, the originating exchange sends the initial message (e.g. ISUP IAM, SIP INVITE, etc.) to the terminating exchange. It includes the caller's maturity level or restriction rating. In message 104, the terminating exchange fetches the called subscriber data from Home Subscriber Database (e.g. HLR, HSS, etc.). In message 105, the terminating exchange contacts the Application Server (e.g. SCP) to take control of the call. In message 106, the Application Server instructs the terminating exchange to connect to the IP Player. In message 107, the terminating exchange connects to the IP Player. It includes the caller's maturity level or restriction rating in the initial message. In message 108, the IP Player selects appropriate tone according to the called subscriber profile and the caller's maturity level or restriction rating. In step 109, the IP Player starts playing RBT content.

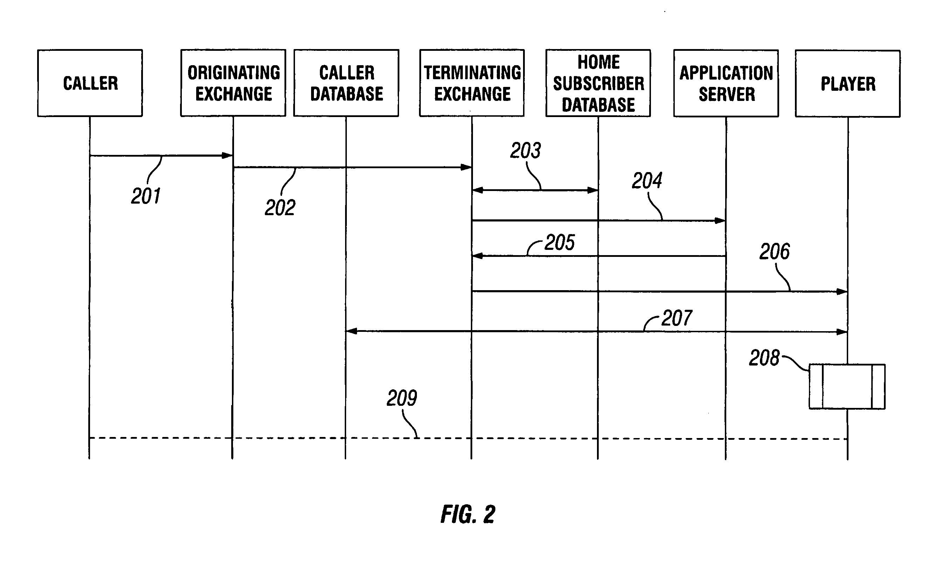

Referring now to Figure 2, a signaling diagram illustrating the first embodiment of the present invention wherein maturity level or restriction rating information is pulled by an IP Player is provided. As seen therein, in message 201, a caller initiates a call. In message 202, the originating exchange sends the initial message (e.g. ISUP IAM, SIP INVITE, etc.) to the terminating exchange without the caller's maturity level or restriction rating. In message 203, the terminating exchange fetches the called subscriber data from Home Subscriber Database (e.g. HLR, HSS, etc.). In message 104, the terminating exchange contacts the Application Server (e.g. SCP) to take control of the call. In message 205, the Application Server instructs the terminating exchange to connect to the IP Player. In message 206, the terminating exchange connects to the IP Player. In message 207, the Player fetches the caller's maturity level or restriction rating from a database. This database can be a standalone element, or part of a home subscriber database, originating exchange, or some other node. In message 208, the IP Player selects appropriate tone according called subscriber profile and caller's maturity level or restriction rating. In step 209, the IP Player starts playing RBT content.

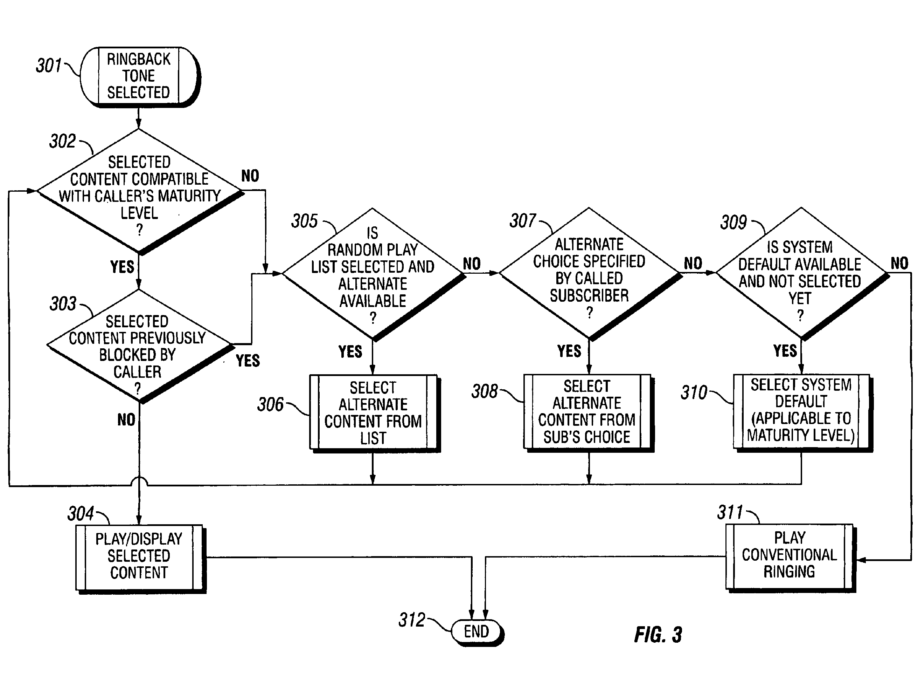

Referring to Figure 3, a flow chart of the method of a first embodiment of the present invention is provided. For purposes of this embodiment, it is assumed that the subscriber whose equipment is used to call a called party, has a profile stored in a calling party database setting forth a certain maturity level or restriction rating. As seen therein, in step 301, a RBT is selected after the caller has called the called party, based on the called subscriber's RBT profile. In step 302, information in the caller's profile is reviewed against RBT content rating information concerning the called party's RBT content. It is determined, based on this review whether the selected RBT content is compatible with the caller's maturity level or restriction rating. If it is compatible, then in step 303, it is determined if the RBT content was previously blocked by the caller. If it is not blocked, then in step 304, the RBT content is played or displayed to the caller. If, in step 302, the content is not compatible with the caller's maturity level or restriction rating, or if in step 303, the RBT content has previously been blocked, then in step 305, it is determined if a random play list is selected and an alternate RBT content available. If so, then in step 306, an alternate RBT content is selected and the compatibility review/previous block steps 302 and 303 are performed. If not, then in step 307 it is determined whether an alternate RBT content choice selected by the called party is available. If so, in step 308, the alternate RBT content is selected and the compatibility review/previous block steps 302 and 303 are performed. If not, then in step 309, it is determined if a system default is available and not yet selected. If so, then in step 310, the system default is selected and the compatibility review/previous block steps 102 and 103 are performed. If not, then in step 311, a conventional ring is played to the calling party. The method terminates at step 312 after first reaching either step 304 or 311.

The first embodiment of the present invention facilitates the provision by service providers to its subscribers the ability to control, for example by blocking, the presentation of inappropriate material to the caller of the equipment, such as adult material and vulgar and offensive songs. In the absence of the present invention, it is not possible for callers to control RBT content, which they may deem offensive.

In the first embodiment of the present invention, information regarding the maturity level or restriction rating of the caller is saved in a calling party database and made available to an SCP or RBT platform. In one aspect of the first embodiment, a caller is automatically assigned a maturity level or restriction rating. Alternatively, the caller, identified by the network based on service agreement or subscription, may voluntarily select or subscribe to a maturity level or restriction rating. This maturity level or restriction rating can be stored locally in the switch, or in a database such as, for example, a Line Information Database, Service Control Point, Home Location Register, or Home Subscriber Server.

When a call, data session, or multimedia session is originated, the originating switch or database is adapted to push the maturity level or restriction rating of the caller to the terminating switch or service provider. In the absence of such forwarding, it is possible for the terminating service provider to pull in the maturity level or restriction rating of the equipment used by the caller from the originating switch on an as-needed basis. The maturity level or restriction rating can then be conveyed from the originating switch to the terminating switch in a number of ways, such as an ISDN User Part (ISUP) Initial Address Message (IAM), CAMEL Application Part/Intelligent Network Application Protocol (CAP/INAP) Initial DP message, and Session Initiation Protocol (SIP): INVITE. In a similar manner, a Transaction Capability Application Part (TCAP) or SIP query from the terminating switch can pull in the maturity level or restriction rating. Both Initial DP and IAM messages support the Calling Party's Category (CPC) parameter, which typically conveys information such as ordinary, test, operator, payphone, prison, hotel, hospital, police, cellular, cellular-roaming, and unknown caller. In the present invention, this parameter is enhanced to include a maturity level or restriction rating as selected by the subscriber/caller and attributed to their equipment. For example, this classification could be child, teen junior, teen senior, young adult, and adult. Instead of extending CPC, it is also possible to use Generic Digits or another parameter to convey the same information to the service platform.

The maturity levels or restriction ratings used by the present invention can be correlated to ratings currently applied to movies and other media. Advantageously, in the present invention, a subscriber is able to assign RBT content appropriate to a caller's maturity level or restriction rating. The present invention can be adapted to specify multiple defaults, one for each content rating and/or maturity level or restriction rating. Similarly, Random Play can also be applied to groups identified only by their maturity level or restriction rating.

This present invention is not limited to facilitating parental control of RBT content. The present invention can be used in any service that is based on the known information regarding the maturity level or restriction rating of the caller, such as gaming applications, video applications, and other applications where legally mandated or user selected restriction on materials presented is required or necessary. The present invention can also be used in connection with the presentation of RBT content (advertisements, or called party selected material) during silent intervals (muted, put on hold, etc.) in a call or communication session.

In a second embodiment of the present invention, a method and system is provided in which a caller, once a call is set in motion, can disable the playing of RBT content by, for example, entering certain key strokes on the keypad of their equipment. For example, when a caller places a call, the caller would have certain options that can be exercised during call placement, or after call placement and during RBT playback:
(1) To deactivate RBT for that particular call, certain entry codes are entered, or prompts responded to, by the caller into an input means of the telephone, such as a keypad, voice recognition system, and/or touchscreen, and are decoded by the system [indicate which parts of the system cooperate to receive and decode and then deactivate or modify the RBT content] (for example, such caller entry may be: "*RBT*P*B-[number]"). Alternatively, this service may be subscribed to on a permanent basis, whereby the subscriber is able to deactivate RBT for all calls. [In such cases, the service may be bound to a telephone by a hardwired circuit, software implemented on the platform or on a Subscriber Identity Module (SIM).]
(2) To deactivate a particular RBT for a particular call, a different entry code can be entered, or prompts responded to, by the caller, such as "*PP". This can be used in the event that a Random Play RBT option is permitted by the operator. When this code is entered, the Player will jump to the next tone in the list.
(3) To deactivate RBT for a particular call and all future calls, for that particular called party, a different entry code can be entered, or prompts responded to, by the caller, such as "*RBT*C*B-[number]".
(4) To reactivate RBT for a particular call and all future calls, for that particular called party, a different entry code can be entered, or prompts responded to, by the caller, such as "*RBT*R*B-[number]". If a caller has permanently subscribed to the deactivation of RBT content, the subscriber may reactivate the RBT on a call by call basis.
(5) To deactivate parental control for a particular call, a different entry code can be entered, or prompts responded to, by the caller, such as "*PC*P*PW*B-[number]" where PW is a password.
(6) To deactivate parental control for that particular call and all future calls, for that particular called party, a different entry code can be entered, or prompts responded to, by the caller, such as "*PC*C*PW*B-[number]".
(7) To deactivate parental control for that particular call and all future calls, for any called party, a different entry code can be entered, or prompts responded to, by the caller, such as "*PC*A*PW*B-[number]".
(8) To reactivate parental control for that particular call and all future calls, for that particular called party, a different entry code can be entered, or prompts responded to, by the caller, such as "*PC*R* B-[number], PW." All star (*) codes above are defined by the standards or service provider. If the codes are entered during RBT playback then "*B-[number]" at the end are not required.

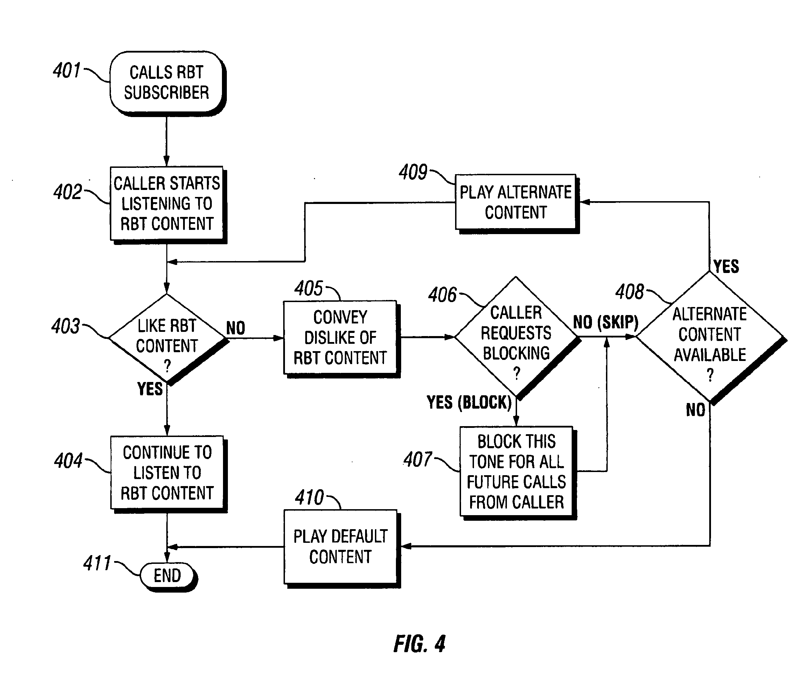

Figure 4 is a flow chart of the steps of a second embodiment of the present invention. As seen therein, in step 401, a calling party calls a called party who is an RBT subscriber. In step 402, a caller starts listening to or viewing the RBT content of the called party. In step 403, the caller decides if they like the RBT content. If they like the RBT content, then in step 404, they continue to listen to or view it until the called party answers and the process ends at step 411. If they do not like the RBT content at step 405, then at step 406, the caller can have the option to request blocking of that particular RBT content. At step 407, the caller can block the particular RBT content for all future calls made from the caller's equipment. If the caller does not want to block future RBT content, they can, nevertheless, in step 408, request if alternate RBT content is available. If alternate RBT content is available, it can be played and/or displayed at step 409. With respect to this alternate RBT content, the method returns to step 403 so that the caller can determine if they like the alternate RBT content with the method continuing to steps 404 or 405 depending on that determination. If no alternate content is available, then in step 410, default RBT content is played and/or displayed until the called party answers and the process ends at step 411.

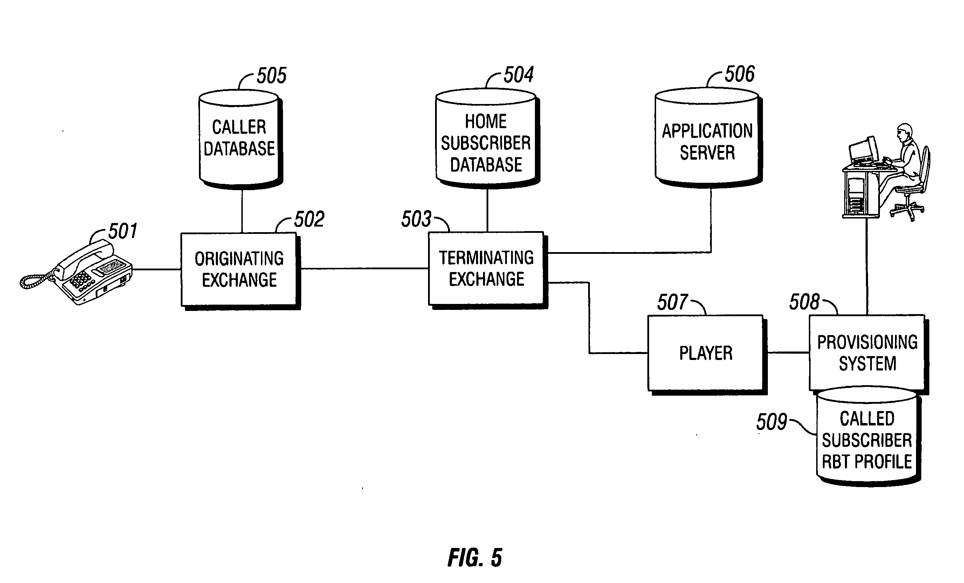

Referring now to Figure 5, a block diagram of a system adapted to perform the steps of the invention is illustrated. Seen therein are calling party equipment 501 which is coupled to an originating switch 502. Originating switch 502 is then coupled to called party GMSC 503, which is coupled to called party HLR 504. Called party HLR 504 is coupled to calling party database 505. Calling party database 505 retains a profile of the level or restriction rating attributed to the equipment of the calling party. SCP 506 and IP Player 507 are also coupled to called party GMSC 503. Called party provisioning system 508 is coupled to IP Player 507 and called party RBT profile 509 is coupled to provisioning system 508.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of alerting a calling party that a connection to a called party in a telecommunications system is being attempted, comprising the steps of:
transmitting information regarding a maturity level or restriction rating correlated to an equipment used by the calling party to a ringback tone, RBT, platform from a network node;
determining whether selected RBT content is compatible with the information regarding a maturity level or restriction rating;
causing, if the selected RBT content is compatible with the information regarding a maturity level or restriction rating, the selection of RBT content to be conveyed to the equipment used by the calling party;
determining, if the selected RBT content is not compatible with the information regarding a maturity level or restriction rating, whether alternate RBT content is available in dependence upon the information regarding a maturity level or restriction rating and, if said alternate RBT content is available, causing the alternate RBT content to be conveyed to the equipment used by the calling party; and
causing, if said alternate RBT content is not available, the conveyance of a standard ring tone or default RBT content to the equipment of the calling party.

2. The method of claim 1, wherein the network node is one from the group consisting of an end office switch and a Mobile Switching Center, MSC.

3. The method of claim 1, further comprising the step of overriding a subscribed class of restriction according to a predetermined time limit.

4. A system for connecting a calling party to a called party in a telecommunications system, comprising a means of controlling or overriding the content of a Ring Back Tone, RBT, played to the calling party on an equipment of the calling party, wherein said system comprises:
a network node adapted to store maturity levels and restriction ratings data correlated to the equipment used by the calling party, said network node adapted to convey said data to an RBT platform used to store RBT content correlated to the equipment of a called party;
means for determining whether selected RBT content is compatible with the maturity levels or restriction ratings data;
means for playing or displaying, if the selected RBT content is compatible with the maturity levels or restriction ratings data, the selection of RBT content to the calling party;
means for determining, if the selected RBT content is not compatible with the maturity levels or restriction ratings data, whether alternate RBT content is available in dependence upon the maturity levels or restriction ratings data and, if said alternate RBT content is available, means for playing or displaying the alternate RBT content to the calling party; and
means for playing or displaying, if said alternate RBT content is not available, the conveyance of a standard ring tone or default RBT content to the calling party.

5. The system of claim 4, wherein the network node comprises one from the group consisting of an end office switch and a Mobile switching Center (MSC).

6. The system of claim 4, wherein a called party selects RBT content to be correlated to the maturity levels or restriction ratings of the equipment used by the calling party.

7. The system of claim 4, wherein a service provider provides default RBT content that is presented to the equipment used by the calling party based on the maturity level or restriction rating.

8. A platform used in connecting a calling party or subscriber to a called party in a telecommunications system, comprising a first node having hardware and software for storing profiles of the calling party related to maturity levels or restriction ratings, said node in communication with a second node that is adapted to control the content of a Ring Back Tone, RBT, played on equipment of the calling party based on the maturity levels or restriction ratings, wherein the platform comprises:
means for determining whether selected RBT content is compatible with the maturity levels or restriction ratings data;
means for playing or displaying, if the selected RBT content is compatible with the maturity levels or restriction ratings data, the selection of RBT content to the calling party;
means for determining, if the selected RBT content is not compatible with the maturity levels or restriction ratings data, whether alternate RBT content is available in dependence upon the maturity levels or restriction ratings data and, if said alternate RBT content is available, means for playing or displaying the alternate RBT content to the calling party; and
means for playing or displaying, if said alternate RBT content is not available, the conveyance of a standard ring tone or default RBT content to the calling party.

9. The platform of claim 8, wherein the first node comprises a switch or database selected from the group consisting of a Line Information Database, Service Control Point, Home Location Register, and Home Subscriber Server.

10. The platform of claim 8, adapted to present RBT content as determined by a network service provider.

11. The platform of claim 8, adapted to present RBT content having a certain maturity level or restriction rating as determined by a subscriber to the equipment used by calling party pursuant to a service agreement or subscription.

12. The platform of claim 11, wherein the maturity level or restriction rating is stored locally in the first node, said first node further comprising an originating switch or a database server.

13. The platform of claim 12, wherein the first node is an originating switch that is adapted, when a call, data session, or multimedia session is originated, to forward the maturity level or restriction rating of the calling party or subscriber to the second node which is a terminating switch.

14. The platform of claim 13, wherein the maturity level or restriction rating is conveyed from the originating switch to the terminating switch using one from the group consisting of an ISDN User Part, ISUP, Initial Address Message, IAM, CAMEL Application Part/Intelligent Network Application, Protocol, CAP/INAP, Initial DP message, and Session Initiation Protocol, SIP, : INVITE.

15. The platform of claim 13, wherein the terminating switch is adapted to pull in the maturity level or restriction rating of the equipment used by the calling party from the originating switch on an as-needed basis.

16. The platform of claim 15, wherein the terminating switch is adapted to pull in the maturity level or restriction rating of the equipment used by the calling party from the originating switch using one from the group consisting of: a Transaction Capability Application Part, TCAP, and a SIP query.

## Patentansprüche

1. Verfahren zum Alarmieren eines anrufenden Teilnehmers, dass eine Verbindung zu einem angerufenen Teilnehmer in einem Telekommunikationssystem versucht wird, umfassend die Schritte:
Senden von Informationen bezüglich eines Reifegrads oder einer Beschränkungsbewertung, die mit einer durch den anrufenden Teilnehmer verwendeten Ausrüstung korreliert ist, aus einem Netzwerkknoten an eine Freiton-Plattform (RBT);
Bestimmen, ob ausgewählter RBT-Inhalt mit den Informationen bezüglich eines Reifegrads oder Beschränkungsbewertung kompatibel ist;
Veranlassen, falls der ausgewählte RBT-Inhalt mit der Information bezüglich eines Reifegrads oder einer Beschränkungsbewertung kompatibel ist, dass die Auswahl von RBT-Inhalt an die durch den anrufenden Teilnehmer verwendete Ausrüstung befördert wird;
Bestimmen, falls der ausgewählte RBT-Inhalt nicht mit der Information bezüglich eines Reifegrads oder einer Beschränkungsbewertung kompatibel ist, ob alternativer RBT-Inhalt verfügbar ist, in Abhängigkeit von der Information bezüglich eines Reifegrads oder einer Beschränkungsbewertung, und, falls der alternative RBT-Inhalt verfügbar ist, den alternativen RBT-Inhalt veranlassen, an die durch den anrufenden Teilnehmer verwendete Ausrüstung befördert zu werden; und
Veranlassen, falls der alternative RBT-Inhalt nicht verfügbar ist, der Beförderung eines Standard-Klingeltons oder Standard-RBT-Inhalts an die Ausrüstung des anrufenden Teilnehmers.

2. Verfahren nach Anspruch 1, wobei der Netzwerkknoten einer aus der Gruppe ist, die aus einer Endvermittlungsstelle und einer Mobilfunkvermittlungsstelle, MSC, besteht.

3. Verfahren nach Anspruch 1, weiter umfassend den Schritt des Überschreibens einer abonnierten Klasse von Beschränkung anhand einer vorgegebenen Zeitgrenze.

4. System zum Verbinden eines anrufenden Teilnehmers mit einem angerufenen Teilnehmer in einem Telekommunikationssystem, umfassend ein Mittel zum Steuern oder Überschreiben des Inhalts eines Ruftons, RBT, welcher dem anrufenden Teilnehmer auf einer Ausrüstung des anrufenden Teilnehmers vorgespielt wird, wobei das System umfasst:
einen Netzwerkknoten, der dafür ausgelegt ist, Reifegrad- und Beschränkungsbewertungsdaten zu speichern, die mit der durch den anrufenden Teilnehmer verwendeten Ausrüstung korreliert sind, wobei der Netzwerkknoten dafür ausgelegt ist, die Daten an eine zum Speichern von mit der Ausrüstung eines angerufenen Teilnehmers korreliertem RBT-Inhalt verwendete RBT-Plattform zu befördern;
Mittel zum Bestimmen, ob der ausgewählte RBT-Inhalt kompatibel mit den Reifegraden oder Beschränkungsbewertungsdaten ist;
Mittel zum Vorspielen oder Anzeigen der Auswahl des RBT-Inhalts dem anrufenden Teilnehmer, falls der ausgewählte RBT-Inhalt kompatibel mit den Reifegraden oder Beschränkungsbewertungsdaten ist;
Mittel zum Bestimmen, falls der ausgewählte RBT-Inhalt nicht mit den Reifegraden oder Beschränkungsbewertungsdaten kompatibel ist, ob ein alternativer RBT-Inhalt verfügbar ist, in Abhängigkeit von den Reifegraden oder Beschränkungsbewertungsdaten, und, falls der alternative RBT-Inhalt verfügbar ist, Mittel zum Vorspielen oder Anzeigen des alternativen RBT-Inhalts dem anrufenden Teilnehmer; und
Mittel zum Vorspielen oder Anzeigen des Beförderns eines Standard-Klingeltons oder von Standard-RBT-Inhalt dem anrufenden Teilnehmer, falls der alternative RBT-Inhalt nicht verfügbar ist.

5. System nach Anspruch 4, wobei der Netzwerkknoten einen aus der Gruppe umfasst, die aus einer Endvermittlungsstelle und einer Mobilfunk-Vermittlungsstelle (MSC) besteht.

6. System nach Anspruch 4, wobei ein anrufender Teilnehmer einen RBT-Inhalt auswählt, der mit den Reifegraden oder Beschränkungsbewertungen der durch den anrufenden Teilnehmer verwendeten Ausrüstung korreliert werden soll.

7. System nach Anspruch 4, wobei ein Netzbetreiber Standard-RBT-Inhalt bereitstellt, welcher der von dem anrufenden Teilnehmer verwendeten Ausrüstung präsentiert wird, basierend auf dem Reifegrad und der Beschränkungsbewertung.

8. Eine beim Verbinden eines anrufenden Teilnehmers oder Abonnenten mit einem angerufenen Teilnehmer in einem Telekommunikationssystem verwendete Plattform, umfassend einen ersten Knoten mit Hardware und Software zum Speichern von Profilen des anrufenden Teilnehmers, die sich auf Reifegrade und Beschränkungsbewertungen beziehen, wobei der Knoten in Kommunikation mit einem zweiten Knoten steht, der dafür ausgelegt ist, den Inhalt eines Freitons, RBT, zu steuern, welcher auf der Ausrüstung des anrufenden Teilnehmers abgespielt wird, basierend auf den Reifegraden oder Beschränkungsbewertungen, wobei die Plattform umfasst:
Mittel zum Bestimmen, ob der ausgewählte RBT-Inhalt kompatibel mit den Reifegraden oder Beschränkungsbewertungsdaten ist;
Mittel zum Vorspielen oder Anzeigen der Auswahl des RBT-Inhalts dem anrufenden Teilnehmer, falls der ausgewählte RBT-Inhalt kompatibel mit den Reifegraden oder Beschränkungsbewertungsdaten ist;
Mittel zum Bestimmen, falls der ausgewählte RBT-Inhalt nicht mit den Reifegraden oder Beschränkungsbewertungsdaten kompatibel ist, ob ein alternativer RBT-Inhalt verfügbar ist, in Abhängigkeit von den Reifegraden oder Beschränkungsbewertungsdaten, und, falls der alternative RBT-Inhalt verfügbar ist, Mittel zum Vorspielen oder Anzeigen des alternativen RBT-Inhalts dem anrufenden Teilnehmer; und
Mittel zum Vorspielen oder Anzeigen des Beförderns eines Standard-Klingeltons oder von Standard-RBT-Inhalt dem anrufenden Teilnehmer, falls der alternative RBT-Inhalt nicht verfügbar ist.

9. Plattform nach Anspruch 8, wobei der erste Knoten einen Schalter oder eine Datenbank umfasst, der oder die ausgewählt sind aus der Gruppe, die aus einer Leitungsinformations-Datenbank, Dienstkontrollpunkt, Heimatstandortverzeichnis und Heimatteilnehmerserver besteht.

10. Plattform nach Anspruch 8, dafür ausgelegt, RBT-Inhalte, wie durch einen Netzwerkdiensteanbieter bestimmt, zu präsentieren.

11. Plattform nach Anspruch 8, dafür ausgelegt, einen RBT-Inhalt mit einem bestimmten Reifegrad oder Beschränkungsbewertung, wie durch einen Teilnehmer bestimmt, der durch den anrufenden Teilnehmer verwendeten Ausrüstung gemäß einer Dienstevereinbarung oder einem Abonnement zu präsentieren.

12. Plattform nach Anspruch 11, wobei der Reifegrad oder die Beschränkungsbewertung lokal im ersten Knoten gespeichert ist, wobei der erste Knoten weiter einen Ursprungsschalter oder einen Datenbankserver umfasst.

13. Plattform nach Anspruch 12, wobei der erste Knoten ein Ursprungsschalter ist, der dafür ausgelegt ist, wenn ein Anruf, eine Datensitzung oder eine Multimedia-Sitzung begonnen wird, den Reifegrad oder die Beschränkungsbewertung des anrufenden Teilnehmers oder Abonnenten an den zweiten Knoten, der ein terminierender Schalter ist, weiterzuleiten.

14. Plattform nach Anspruch 13, wobei der Reifegrad oder die Beschränkungsbewertung aus dem Ursprungsschalter an den terminierenden Schalter unter Verwendung eines aus der Gruppe transportiert wird, die besteht aus einem ISDN-Anwenderteil, ISUP, Anfangsadressennachricht, IAM, CAMEL-Anwendungs-Teil/Intelligentes Netzwerk-Anwendungsprotokoll, CAP/INAP, Anfangs-DP-Nachricht und Sitzungs-Initiierungs-Protokoll, INVITE.

15. Plattform nach Anspruch 13, wobei der terminierende Schalter dafür ausgelegt ist, den Reifegrad oder die Beschränkungsbewertung der durch den anrufenden Teilnehmer verwendeten Ausrüstung aus dem Ursprungsschalter nach Bedarf zu ziehen.

16. Plattform nach Anspruch 15, wobei der terminierende Schalter dafür ausgelegt ist, den Reifegrad oder die Beschränkungsbewertung der durch den anrufenden Teilnehmer verwendeten Ausrüstung aus dem Ursprungsschalter unter Verwendung eines aus der Gruppe zu ziehen, welche besteht aus: einem Transaktionsfähigkeits-Anwendungsteil, TCAP, und einer SIP-Abfrage.

## Revendications

1. Procédé d'alerte d'un correspondant appelant en ce qu'une connexion à un correspondant appelé dans un système de télécommunications est en train d'être tentée, comprenant les étapes consistant à :
transmettre des informations concernant un niveau de maturité ou une évaluation de restriction corrélées à un équipement utilisé par le correspondant appelant à une plate-forme de tonalité de retour d'appel, RBT, à partir d'un noeud de réseau ;
déterminer si un contenu sélectionné de RBT est compatible avec les informations concernant un niveau de maturité ou une évaluation de restriction ;
amener, si le contenu sélectionné de RBT est compatible avec les informations concernant un niveau de maturité ou une évaluation de restriction, la sélection de contenu de RBT à être acheminée vers l'équipement utilisé par le correspondant appelant ;
déterminer, si le contenu sélectionné de RBT n'est pas compatible avec les informations concernant un niveau de maturité ou une évaluation de restriction, si une variante de contenu de RBT est disponible en fonction des informations concernant un niveau de maturité ou une évaluation de restriction et, si ladite variante de contenu de RBT est disponible, amener la variante de contenu de RBT à être acheminée vers l'équipement utilisé par le correspondant appelant ; et
causer, si ladite variante de contenu de RBT n'est pas disponible, l'acheminement d'une tonalité d'appel standard ou d'un contenu de RBT par défaut vers l'équipement du correspondant appelant.

2. Procédé selon la revendication 1, dans lequel le noeud de réseau en est un du groupe consistant en un commutateur de central de rattachement et un Centre de Commutation Mobile, CSM.

3. Procédé selon la revendication 1, comprenant en outre l'étape consistant à ignorer une classe de restriction souscrite selon une limite de temps prédéterminée.

4. Système pour connecter un correspondant appelant à un correspondant appelé dans un système de télécommunications, comprenant un moyen de commande ou d'annulation du contenu d'une Tonalité de Retour d'Appel, RBT, jouée au correspondant appelant sur un équipement du correspondant appelant, dans lequel ledit système comprend :
un noeud de réseau conçu pour stocker des données de niveaux de maturité et d'évaluations de restriction corrélées à l'équipement utilisé par le correspondant appelant, ledit noeud de réseau étant conçu pour acheminer lesdites données vers une plate-forme RBT utilisée pour stocker un contenu de RBT corrélé à l'équipement d'un correspondant appelé ;
un moyen pour déterminer si un contenu de RBT sélectionné est compatible avec les données de niveaux de maturité ou d'évaluations de restriction ;
un moyen pour jouer ou afficher, si le contenu de RBT sélectionné est compatible avec les données de niveaux de maturité ou d'évaluations de restriction, la sélection de contenu de RBT au correspondant appelant ;
un moyen pour déterminer, si le contenu sélectionné de RBT n'est pas compatible avec les données de niveaux de maturité ou d'évaluations de restriction, si une variante de contenu de RBT est disponible en fonction des données de niveaux de maturité ou d'évaluations de restriction et, si ladite variante de contenu de RBT est disponible, un moyen pour jouer ou afficher la variante de contenu de RBT au correspondant appelant ; et
un moyen pour jouer ou afficher, si ladite variante de contenu de RBT n'est pas disponible, l'acheminement d'une tonalité standard ou d'un contenu de RBT par défaut au correspondant appelant.

5. Système selon la revendication 4, dans lequel le noeud de réseau en comprend un du groupe consistant en un commutateur de central de rattachement et un Centre de Commutation Mobile (CSM).

6. Système selon la revendication 4, dans lequel un correspondant appelé sélectionne un contenu de RBT devant être corrélé aux niveaux de maturité ou aux évaluations de restriction de l'équipement utilisé par le correspondant appelant.

7. Système selon la revendication 4, dans lequel un fournisseur de services fournit un contenu de RBT par défaut qui est présenté à l'équipement utilisé par le correspondant appelant sur base du niveau de maturité ou de l'évaluation de restriction.

8. Plate-forme utilisée en connectant un correspondant ou un abonné appelant à un correspondant appelé dans un système de télécommunications, comprenant un premier noeud ayant du matériel et du logiciel pour stocker des profils du correspondant appelant ayant trait à des niveaux de maturité ou à des évaluations de restriction, ledit noeud étant en communication avec un second noeud qui est conçu pour commander le contenu d'une Tonalité de Retour d'Appel, RBT, jouée sur de l'équipement du correspondant appelant sur base des niveaux de maturité ou des évaluations de restriction, dans laquelle la plate-forme comprend :
un moyen pour déterminer si un contenu sélectionné de RBT est compatible avec les données de niveaux de maturité ou d'évaluations de restriction ;
un moyen pour jouer ou afficher, si le contenu de RBT sélectionné est compatible avec les données de niveaux de maturité ou d'évaluations de restriction, la sélection de contenu de RBT au correspondant appelant ;
un moyen pour déterminer, si le contenu de RBT sélectionné n'est pas compatible avec les données de niveaux de maturité ou d'évaluations de restriction, si une variante de contenu de RBT est disponible en fonction des données de niveaux de maturité ou d'évaluations de restriction et, si ladite variante de contenu de RBT est disponible, un moyen pour jouer ou afficher la variante de contenu de RBT au correspondant appelant ; et
un moyen pour jouer ou afficher, si ladite variante de contenu de RBT n'est pas disponible, l'acheminement d'une tonalité d'appel standard ou d'un contenu de RBT par défaut au correspondant appelant.

9. Plate-forme selon la revendication 8, dans laquelle le premier noeud comprend un commutateur ou une base de données sélectionnée à partir du groupe consistant en une Base de données d'Informations de Ligne, un Point de Commande de Services, un Enregistreur de Localisation Nominal, et un Serveur d'Abonnés Domestiques.

10. Plate-forme selon la revendication 8, conçue pour présenter un contenu de RBT tel que déterminé par un fournisseur de services de réseau.

11. Plate-forme selon la revendication 8, conçue pour présenter un contenu de RBT ayant un certain niveau de maturité ou une certaine évaluation de restriction, tel(le) que déterminé(e) par un abonné, à l'équipement utilisé par un correspondant appelant conformément à un accord de service ou à un abonnement.

12. Plate-forme selon la revendication 11, dans laquelle le niveau de maturité ou l'évaluation de restriction est stocké localement dans le premier noeud, ledit premier noeud comprenant en outre un commutateur de départ ou un serveur de base de données.

13. Plate-forme selon la revendication 12, dans laquelle le premier noeud est un commutateur de départ qui est conçu, quand un appel, une session de données, ou une session multimédia en est originaire, pour faire suivre le niveau de maturité ou l'évaluation de restriction du correspondant ou abonné appelant au second noeud qui est un commutateur d'arrivée.

14. Plate-forme selon la revendication 13, dans laquelle le niveau de maturité ou l'évaluation de restriction est acheminé depuis le commutateur de départ jusqu'au commutateur d'arrivée en en utilisant un du groupe consistant en un sous-système utilisateur RNIS, SSUR, un Message d'Adresse Initial, IAM, un sous-système d'Application CAMEL / Protocole d'Application de Réseau Intelligent, CAP / INAP, un message DP Initial, et un Protocole d'Ouverture de Session, SIP, : INVITE.

15. Plate-forme selon la revendication 13, dans laquelle le commutateur d'arrivée est conçu pour faire venir le niveau de maturité ou l'évaluation de restriction de l'équipement utilisé par le correspondant appelant en provenance du commutateur de départ sur une base à la demande.

16. Plate-forme selon la revendication 15, dans laquelle le commutateur d'arrivée est conçu pour faire venir le niveau de maturité ou l'évaluation de restriction de l'équipement utilisé par le correspondant appelant en provenance du commutateur de départ en en utilisant un du groupe consistant en un Sous-système d'Application Gestion de Transaction, TCAP, et une requête SIP.
